# EUROPEAN PATENT SPECIFICATION

(11) **EP 0 682 469 B1**
(45) Date of publication and mention of the grant of the patent: **16.04.1997**
(21) Application number: 94907016.3
(22) Date of filing: 04.02.1994
(51) Int. Cl.: A01F 25/08, F26B 25/10

(54) **WALL ELEMENT PROVIDED WITH VENTILATION PASSAGES**
WANDELEMENT MIT VENTILATIONSDURCHGÄNGEN
ELEMENT DE MUR POURVU DE PASSAGES DE VENTILATION

(30) Priority: 04.02.1993 NL 9300225
(43) Date of publication of application: 22.11.1995
(73) Proprietor: VAN DEN BOSCH, Gerrit, NL-3774 RL Kootwijkerbroek (NL)
(72) Inventor: VAN DEN BOSCH, Gerrit, NL-3774 RL Kootwijkerbroek (NL)
(74) Representative: De Hoop, Eric
(86) International application number: NL9400029
(87) International publication number: WO9417654

(56) References cited:
- GB-A- 1 122 477
- GB-A- 1 604 969
- GB-A- 2 132 744
- US-A- 4 562 678

## Description

The invention relates to a wall element as described in the preamble of claim 1, that is to say a floor element or a vertical wall element, for storage spaces for storing goods such as compost, potatoes, carrots, sugar-beet, but also seeds, grain and so forth, which during storage have to come into contact with gases (air) and/or liquids, which have to be led through the goods via wall elements. This can, for example, be to avoid anaerobic processes, to cool or to dry.

Storing such goods in an open storage is known, the goods, possibly supported in a transverse direction by concrete vertical wall elements, being put on a floor which is made up of a series of floor elements forming a paving, the floor elements being provided with through slots. These slots extend from the supporting surface of the floor elements to the opposite side thereof. The floor elements are supported on basement walls or basement beams, which determine a basement space into which the lower end of the slots debouch.

This basement space can be connected to an over- or under-pressure source of gasses, in particular air. In the first case air is sucked from the basement space, as a result of which air flows through the slots to the basement space, the latter resulting in air being sucked in from the layer of goods supported on the floor element, which latter air is then replenished with air from above the goods, the goods being repeatedly brought into contact with fresh air as a consequence. In the second case pressurized air is fed to the basement space and is pressed by the overpressure through the slots in order to flow via the interspaces between the goods to the space above the goods.

The known floor elements have quite a large supporting surface, interrupted by the outlets of the ventilation slots. In the case of the underpressure system the flow of air through the layer of goods will be substantially directed towards the discrete places of this outlet. In the case of the overpressure system the air will enter the layer of goods at the location of the outlet of the slots. In both cases in the area of the layer of goods which is between the slots the flow of air will remain reduced, to such an extent that anaerobic processes can occur there.

Another drawback of the known floor elements is that when a part of the quantity of goods has to be removed, this has to take place by digging off a substantially horizontal layer of goods. The reason for this is that it has appeared that if one were to remove the goods in the easiest manner by digging away the desired quantity from the side, whereby a part of the total supporting surface of the storage would become exposed, at any rate the thickness of the layer of goods would display considerable differences, the air flow would take place substantially via the slots which debouch into the uncovered or less covered areas. Because of the absence of goods there, the resistance will be lower than there where the goods are situated. By digging off a horizontal layer this big difference in resistance is prevented, but this has the disadvantage that a relatively large effort has to be made to remove the desired quantity of goods.

It is an object of the invention to provide a wall element (a floor or vertical wall element), with which an improvement is made to the above.

For this purpose the invention provides a wall element for a storage space for compost, potatoes, seeds and other products, which have to be in contact with a fluid such as air during storage, as described in claim 1.

As a result a flow of fluid is made possible directly below the layer of goods in a direction parallel to the supporting surface, so that in the case of the underpressure as well as the overpressure system, the contact area between the lower surface of the stored layer of goods and the fluid becomes as large as possible, without the constructive strength of the wall element being noticeably reduced due to saving material. Because the fluid can spread over a larger area the resistance against the fluid flow there is also comparatively low.

The resistance which the fluid flow meets with will now be at its highest at the location of the first fluid passages, which form the smallest flow cross section in the (whole) flow path. This means that the local flow rate is no longer substantially determined by the layer of goods but by the wall elements themselves, so that the flow rate, as considered over the supporting surface, will be more uniform, that is to say determined to a lesser extent by the degree of loading and the differences therein.

The further, widened fluid flow passages communicating with one another in a direction parallel to the supporting surface permit the pressure to be distributed evenly to a large extent over the above-mentioned contact area.

Preferably the further fluid passages divide the supporting surface into discrete portions. The further passages are advantageously formed as channels. When a maximum of further fluid passages is desired these channels intersect each other, preferably perpendicularly, and by that they delimit discrete portions of the supporting surface in the form of right angles, for example squares.

Preferably the channels have a trapezoidal cross section. This does not only offer advantages for the manufacture of the wall element if the latter is casted with the help of moulds but also offers the advantage that, along with fulfilling their distributing function, in an overpressure system the channels also help in the spreading of the fluid in the direction perpendicular to the supporting surface.

The first fluid passages widen preferably in the direction away from the supporting surface and are for instance conical. In this way this parts of the stored product which get into the first fluid passages are prevented from being subject to arching and from subsequently clogging the first fluid passage.

The dimensions of the first fluid passages, the further fluid flow passages and the supporting surface, as seen absolutely and relatively, will depend on the nature and the dimensions of the product to be stored, as well as those of the supporting surface. When storing sugar beet the dimensions of the further fluid flow passages in the plane of the supporting surface can be larger than when storing onions or seed-potatoes. If seeds have to be stored, loss of material can be avoided by an extra measure, that is by laying a net with a suitable mesh size on the supporting surface. By using the net which forms as it were bridges at the location of the further fluid flow passages, a wall element with fluid openings in the supporting surface, which are larger than the nominal grain diameter of the grain of the stored product, can still be used for that purpose.

It is noted that a loadbearing floor for crops is known from the UK patent application 2 132 744, formed by a number of floor elements laid down on a firm base, which floor elements are provided with tubular air ducts extending parallel to the base, and with a number of parallel channels extending perpendicular to these air ducts which are located above there, and are formed in the supporting surface. The channels intersect the tubular air ducts so as to form air passage openings there.

A wall element of the kind described in the preamble of claim 1 is known from UK patent 1 604 969. The known floor element is designed for storage spaces for crops, and is provided with through, slot-shaped air supply ducts extending perpendicular to the supporting surface, which debouch into the supporting surface of the floor element via widened upper portions which are seperated from each other.

The invention will now be described in more detail with reference to a preferred embodiment as shown in the drawing.
Fig. 1 shows a schematic cross section of the floor of a storage space, in which wall elements according to the invention are incorporated; and
Fig. 2 shows a top view of a wall element of the floor according to fig. 1.

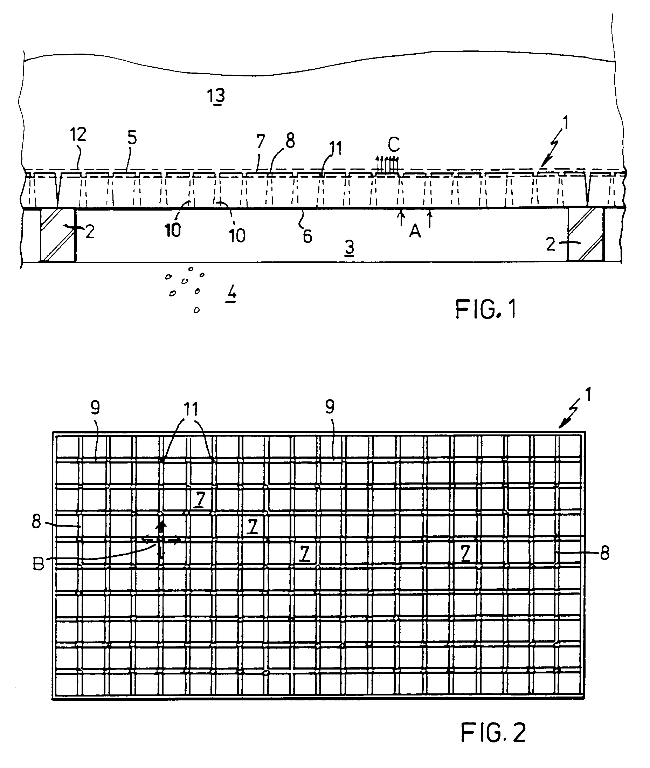

The floor of the storage space shown in fig. 1 is built up of a concrete floor 4, a system of beams 2 arranged thereon and a series of prefabricated wall elements, here floor elements 1, supported on the beams 2. The space between the floor elements 1 and the concrete floor 4, being laterally delimited by the beams 2, forms a basement space 3, through which, in this case, air can be discharged, in the case of an underpressure system, or air can be supplied, in the case of an overpressure system, which last system is applicable in this example. On the floor elements 1 a layer of goods 13, such as compost, potatoes, carrots, sugar beet but also seeds, grains and so forth is stored, which require fresh air during storage.

The floor elements 1 have a lower surface 6 and an upper surface 5, which latter surface serving as a supporting surface for the goods. The supporting surface 5 is divided into square surfaces 7, which are delimited by dividing channels 8, 9, which intersect each other perpendicularly and form a network of channels. The channels 8, 9 are trapezoidal and widen upward. At the location of the intersections of the channels 8, 9 in the bottom thereof outlets 11 of frustoconical ventilation passages 10 with circular cross section are provided, which extend from the lower surface 6 through the floor element 1 and thus form an air link between the basement space 3 and the area above the floor element 1.

When pressurized air is supplied to the basement space 3 it will escape through the ventilation passages 10 upward in the directions A, exit the ventilation passages 10 at the location of the outlets 11 and will partly flow directly through the layer of goods and partly sidewards through the channels 8, 9 in the directions B (see fig. 2) and finally flow in the direction C into the layer of goods in a place between adjacent outlets 11. Thus, it is accomplished that with a relatively small total flow section of the ventilation passages 10 a large part of the lower boundary surface of the layer of goods is supplied with air.

If the goods 13 are fine-grained, such as seeds, it is recommended laying a net 12 over the supporting surface 5 which prevents seeds getting into the channels 8, 9 and/or outlets 11.

By way of example the floor element can have the following dimensions. Starting from a storage for onions having a nominal diameter of 4 to 10 cm, the thickness of the floor element, that is the distance between the surfaces 5 and 6, can be 20 cm, with a breadth and length of the floor element of 3 and 2 meters respectively. In this example the depth of the channels 8, 9 can be 2 cm and the largest width of the channels 8, 9 can be 2 cm. Here the discrete supporting surfaces 7 have dimensions of 10 by 10 cm. Finally, in this case the ventilation passages 10 are conical, with the smallest opening at the top, at the location of the outlets 11, having a diameter of 2 cm, and the largest opening in the lower surface 6 having a diameter of 4 cm. Such a floor element, made of concrete and provided with span or field reinforcement is suitable for being driven on with lorries delivering the goods, for example with a wheel load of 6 tons.

## Claims

1. Wall element (1) for a storage space for compost, potatoes and other products which have to be in contact with a fluid such as air during storage, wherein the wall element has first fluid passages (10), which debouch into the side of the wall element which faces the products, and wherein the wall element has a supporting surface (5), which offers support to the stored products, wherein the outlets (11) of the first fluid passages (10) are positioned retracted with regard to the supporting surface (5), wherein, between the outlets (11) of the first fluid passages (10) and the supporting surface (5), further fluid flow passages (8, 9) are provided, which are widened relative to the outlets (11), and wherein the first fluid passages (10) extend transversely through the wall element from the retracted outlet (11) to the opposite side (6) of the wall element, **characterized in that** the further, widened fluid flow passages (8, 9) communicate with one another in a direction parallel to the supporting surface (15) and within the contours of the wall element (1).

2. Wall element according to claim 1, wherein the further fluid flow passages (8, 9) are channels which are open towards the supporting surface (5).

3. Wall element according to claim 2, wherein the further fluid flow passages (8, 9) define discrete portions (7) of the supporting surface (5).

4. Wall element according to claim 2 or 3, wherein the channels extend from one side edge of the wall element to the opposite side edge thereof.

5. Wall element according to claim 2, 3 or 4, wherein the channels (8, 9) intersect each other, preferably perpendicularly, and delimit support surfaces (7) therebetween in the form of right angles, preferably squares.

6. Wall element according to claim 2, 3, 4 or 5, wherein the channels (8, 9) have a bottom, and the outlets (11) of the first fluid passages (10) are situated in the channel bottom.

7. Wall element according to any one of the claims 2-6, wherein the channels (8, 9) have a trapezoidal cross-section, which widens towards the supporting surface (5).

8. Wall element according to any one of the preceding claims, wherein the first fluid passages (10) widen in the direction away from the outlet (11).

9. Wall element according to claim 8, wherein the first fluid passages (10) are conical, preferably with a circular cross section.

10. Wall element according to anyone of the preceding claims, wherein the wall element (1) is made of concrete and is preferably provided with a reinforcement in order that the wall element can be walked and ridden on.

11. Assembly comprising a wall element (1) according to any one of the preceding claims, and a net (12) which is supported on the supporting surface (5) and which forms a further supporting face at the location of the further fluid flow passages (8, 9), which further support surface is spaced from the openings (11) of the first fluid passages (10) in a direction perpendicular to the support surface (5).

## Patentansprüche

1. Wandelement (1) für ein Lagerraum für Kompost, Kartoffel und andere Produkte, die während des Lagerns mit einem Fluidum wie Luft in Verbindung sein müssen, in welchem das Wandelement erste Fluidumdurchgänge (10) hat, die in der den Produkten zugewandten Seite des Wandelements münden, und in welchem das Wandelement eine Stützfläche (5) hat, die die gelagerten Produkte unterstützt, in welchem die Auslässe (11) der ersten Fluidumdurchgänge (10) hinsichtlich der Stützfläche (5) zurückversetzt aufgestellt sind, in welchem, zwischen den Auslässen (11) der ersten Fluidumdurchgänge (10) und der Stützfläche (5), weitere den Auslässen gegenüber erweiterten Fluidumstromdurchgänge (8, 9) versehen sind, und in welchem die ersten Fluidumdurchgänge (10) sich quer durch das Wandelement vom zurückversetzten Auslaß (11) bis zur entgegengesetzten Seite (6) des Wandelements erstrecken, **dadurch gekennzeichnet**, dass die weiteren, erweiterten Fluidumstromdurchgänge (8, 9) in eine Richtung parallel zu der Stützfläche (15) und innerhalb der Umrisse des Wandelements (1) miteinander kommunizieren.

2. Wandelement nach Anspruch 1, in welchem die Fluidumstromdurchgänge (8, 9) Rinnen sind, die auf die Stützfläche (5) zu offen sind.

3. Wandelement nach Anspruch 2, in welchem die weiteren Fluidumstromdurchgänge (8, 9) diskrete Abschnitte (7) der Stützfläche (5) bestimmen.

4. Wandelement nach Anspruch 2 oder 3, in welchem die Rinnen sich von einem Seitenrand des Wandelements bis zur gegenüberliegenden Seitenrand davon erstrecken.

5. Wandelement nach Anspruch 2, 3 oder 4, in welchem die Rinnen (8, 9) einander kreuzen, vorzugsweise lotrecht, und dazwischen Stützflächen (7) in der Form von Rechtecken, vorzugsweise Quadrate, abgrenzen.

6. Wandelement nach Anspruch 2, 3, 4 oder 5, in welchem die Rinnen (8, 9) einen Boden haben, und die Auslässe (11) der ersten Fluidumstromdurchgänge (10) im Rinnenboden gelegen sind.

7. Wandelement nach irgendeinem der Ansprüche 2-6, in welchem die Rinnen (8, 9) einen trapezförmigen Querschnitt haben, der sich auf die Stützflächen zu erweitert.

8. Wandelement nach irgendeinem der vorgehenden Ansprüche, in welchem sich die ersten Fluidumstromdurchgänge (10) in der Richtung vom Auslaß (11) weg erweitern.

9. Wandelement nach Anspruch 8, in welchem die ersten Fluidumstromdurchgänge (10) konisch sind, vorzugsweise mit einem kreisförmigen Querschnitt.

10. Wandelement nach irgendeinem der vorgehenden Ansprüche, in welchem das Wandelement (1) aus Beton hergestellt ist und vorzugsweise mit einer Armierung versehen ist, damit auf dem Wandelement gelaufen und gefahren werden kann.

11. Anordnung mit einem Wandelement (1) nach irgendeinem der vorgehenden Ansprüche, und mit einem auf der Stützfläche (5) unterstützten Netz (12), das eine weitere Stützfläche an der Stelle der weiteren Fluidumstromdurchgänge (8, 9) bildet, welche weitere Stützfläche mit Abstand von den Öffnungen (11) der ersten Fluidumdurchgänge in eine zu der Stützfläche hin lotrechte Richtung angeordnet ist.

## Revendications

1. Elément de paroi (1) destiné à un espace de stockage pour du compost, des pommes de terre et d'autres produits qui doivent être en contact avec un fluide tel que l'air pendant le stockage, étant entendu que l'élément de paroi comporte des premiers passages de fluide (10), qui débouchent dans le côté de l'élément de paroi qui fait face aux produits, que l'élément de paroi comporte une surface de support (5), qui offre un support aux produits stockés, que les sorties (11) des premiers passages de fluide (10) sont positionnées en retrait par rapport à la surface de support (5), que, entre les sorties (11) des premiers passages de fluide (10) et la surface de support (5), sont prévus des passages d'écoulement de fluide supplémentaires (8, 9) qui sont évasés par rapport aux sorties (11) et que les premiers passages de fluide (10) s'étendent transversalement à travers l'élément de paroi, de la sortie en retrait (11) jusqu'au côté opposé (6) de l'élément de paroi, caractérisé en ce que les passages d'écoulement de fluide évasés supplémentaires (8, 9) communiquent les uns avec les autres dans une direction parallèle à la surface de support (15) et à l'intérieur des contours de l'élément de paroi (1).

2. Elément de paroi suivant la revendication 1, dans lequel les passages d'écoulement de fluide supplémentaires (8, 9) sont des chenaux qui sont ouverts vers la surface de support (5).

3. Elément de paroi suivant la revendication 2, dans lequel les passages d'écoulement de fluide (8, 9) supplémentaires définissent des parties discrètes (7) de la surface de support (5).

4. Elément de paroi suivant la revendication 2 ou 3, dans lequel les chenaux vont d'un bord latéral de l'élément de paroi au bord latéral opposé de celui-ci.

5. Elément de paroi suivant la revendication 2, 3 ou 4, dans lequel les chenaux (8, 9) s'intersectent mutuellement, de préférence perpendiculairement, et délimitent entre eux des surfaces de support (7) à angles droits, de préférence des carrés.

6. Elément de paroi suivant la revendication 2, 3, 4 ou 5, dans lequel les chenaux (8, 9) ont un fond, et les sorties (11) des premiers passages de fluide (10) sont situées dans le fond des chenaux.

7. Elément de paroi suivant l'une quelconque des revendications 2 à 6, dans lequel les chenaux (8, 9) ont une section transversale trapézoïdale qui va en s'évasant vers la surface de support (5).

8. Elément de paroi suivant l'une quelconque des revendications précédentes, dans lequel les premiers passages de fluide (10) vont en s'évasant dans un sens s'éloignant de la sortie (11).

9. Elément de paroi suivant la revendication 8, dans lequel les premiers passages de fluide (10) sont coniques, de préférence avec une section transversale circulaire.

10. Elément de paroi suivant l'une quelconque des revendications précédentes, dans lequel l'élément de paroi (1) est en béton et est, de préférence pourvu d'une armature, afin que l'on puisse marcher et rouler sur l'élément de paroi.

11. Ensemble comportant un élément de paroi (1) suivant l'une quelconque des revendications précédentes, et un filet (12) qui est supporté sur la surface de support (5) et qui forme une face de support supplémentaire au niveau des passages d'écoulement de fluide supplémentaires (8, 9), laquelle surface de support est espacée des ouvertures (11) des premiers passages de fluide (10) dans une direction perpendiculaire à la surface de support (5).
